# EUROPEAN PATENT APPLICATION

(11) **EP 4 786 144 A2**
(43) Date of publication of application: **05.08.2026**
(21) Application number: 26182808.1
(22) Date of filing: 03.06.2026
(51) Int. Cl.: B29C 64/124, B29C 64/232, B29C 64/241, B29C 64/245, B29C 64/259, B33Y 30/00

(54) **LOCKING DEVICE AND PRINTING APPARATUS**

(30) Priority: 31.07.2025 CN 202511073917; 30.09.2025 CN 202511433214; 31.12.2025 CN 202512061749
(71) Applicant: Shining 3D Tech Co., Ltd., Hangzhou, Zhejiang 311258 (CN)
(72) Inventor: WU, Jun, Hangzhou, 311258 (CN); ZHAO, Xiaobo, Hangzhou, 311258 (CN); CHEN, Da, Hangzhou, 311258 (CN); WU, Siyuan, Hangzhou, 311258 (CN); QIAN, Huili, Hangzhou, 311258 (CN)
(74) Representative: Dai, Simin

(57) **Abstract**

Provided are a locking device and a printing apparatus. The locking device includes a first limiting member (200), a second limiting member (300), and a rotating member (400). The second limiting member (300) is disposed opposite to the first limiting member (200) along a first direction, and a clamping space for receiving a target member (800) is defined between the first limiting member (200) and the second limiting member (300). The rotating member (400) is configured to drive at least one of the first limiting member (200) and the second limiting member (300), enabling relative movement between the first limiting member (200) and the second limiting member (300) in the first direction to jointly clamp or release the target member (800) placed in the clamping space.

## Description

### TECHNICAL FIELD

The present disclosure relates to the field of 3D printing technologies, and in particular, to a locking device and a printing apparatus.

### BACKGROUND

With the widespread adoption of digital dentistry, small-scale 3D printing apparatuses have become a pivotal device for manufacturing a dental restoration (such as a single crown, a veneer, an inlay, and a bridge). These apparatuses utilize standardized and miniaturized material tanks as consumables to store high-viscosity printing materials such as ceramic resins.

Users often need to replace the material tanks to accommodate different materials or maintenance needs, so such an operation should be convenient and efficient. However, in existing small-scale 3D printing apparatuses, the integration of multiple components leads to increased costs, complex assembly, low maintenance efficiency, and inconvenient operation.

### SUMMARY

The present disclosure provides a locking device and a printing apparatus. The rotating member drives at least one of the first limiting member and the second limiting member to move up and down, thereby achieving a locked or unlocked state of the capsule containing printing material. In addition, the locking device includes fewer components, which enhances modular design and ease of operation, and reduces costs.

A first aspect of the present disclosure provides a locking device, including: a first limiting member; a second limiting member disposed opposite to the first limiting member along a first direction, wherein a clamping space for receiving a target member is defined between the first limiting member and the second limiting member; a rotating member configured to drive at least one of the first limiting member and the second limiting member, enabling relative movement between the first limiting member and the second limiting member in the first direction to jointly clamp or release the target member placed in the clamping space.

The locking device provided in the first aspect of the present disclosure includes the first limiting member, the second limiting member, and the rotating member. The second limiting member is disposed opposite to the first limiting member along the first direction, and the clamping space for receiving the target member is defined between the first limiting member and the second limiting member. The rotating member is configured to drive at least one of the first limiting member and the second limiting member, enabling relative movement between the first limiting member and the second limiting member in the first direction to jointly clamp or release the target member placed in the clamping space. Thus, the locking device provided by the embodiments of the present disclosure drives at least one of the first limiting member and the second limiting member to move up and down by rotating the rotating member, thereby achieving a locked or unlocked state of the target member. In addition, the locking device includes fewer components, which enhances modular design and ease of operation, and reduces costs.

In an alternative implementation, the rotating member comprises an operating portion configured to allow a user to perform a single-point operation by flicking or pressing the operating portion with one hand, thereby driving the rotating member to move and achieving locking or unlocking of the target member; and/or the target member includes a capsule containing printing material.

In an alternative implementation, the second limiting member is slidably disposed on the first limiting member, the rotating member is located above the second limiting member, and the rotating member is rotatably connected to the first limiting member; a first shaft is disposed on the rotating member, a channel configured for allowing the first shaft to move therein is defined between the second limiting member and the first limiting member, and the first shaft is caused to rotate to drive the second limiting member to slide back and forth along the first direction relative to the first limiting member, thereby achieving the locking or unlocking of the target member.

In an alternative implementation, the rotating member is configured to rotate about a horizontal axis to drive the second limiting member to move.

In an alternative implementation, a first slot is defined in the first limiting member, a second slot is defined in the second limiting member, and the first slot and the second slot define the channel; and the rotating member is configured to be rotated to: drive the first shaft to move within the channel; and thus drive the second limiting member to slide back and forth along the first direction relative to the first limiting member.

In an alternative implementation, the first slot is provided with a protrusion for forming a motion dead point; and when the first shaft moves to be in contact with the protrusion, a force is to be applied to ride over the protrusion to move within the channel.

In an alternative implementation, the rotating member includes a rotating body and a protruding end; the rotating body conforms to an outer surface of the second limiting member, and an orthographic projection of the rotating body toward the first limiting member and an orthographic projection of the first shaft toward the first limiting member overlay; and the protruding end is configured to be rotated to: drive the rotating member to move; and thus drive the second limiting member to slide back and forth along the first direction relative to the first limiting member.

In an alternative implementation, one of the rotating member and the first limiting member is provided with a second shaft, and another of the rotating member and the first limiting member is provided with a mounting hole; and the second shaft mates with the mounting hole, so that the rotating member is rotatably connected to the first limiting member.

In an alternative implementation, the second limiting member is provided with a first guiding structure, and the first limiting member is provided with a second guiding structure; and the first guiding structure mates with the second guiding structure, so that the second limiting member is slidable back and forth along the first direction relative to the first limiting member.

In an alternative implementation, the locking device further includes a driving mechanism connected to the second limiting member and configured to drive the second limiting member to move vertically toward or away from the first limiting member, enabling the first limiting member and the second limiting member to clamp or release the target member.

In an alternative implementation, a horizontal opening is defined between the first limiting member and the second limiting member, enabling the target member to be inserted between the first limiting member and the second limiting member in a horizontal direction through the horizontal opening.

In an alternative implementation, the locking device further includes a horizontal limiting structure configured for positioning the target member in the horizontal direction.

In an alternative implementation, the horizontal limiting structure includes a U-shaped limiting surface, the U-shaped limiting surface has an opening that faces in a same direction as the horizontal opening, the U-shaped limiting surface includes a first plane, an arc-shaped surface and a second plane that are connected in sequence, and the first plane is parallel to the second plane.

In an alternative implementation, the locking device further includes a support portion located below the first limiting member; a through hole is defined in the support portion, and the second limiting member is located in the through hole and is configured to, under driving of the driving mechanism, rise above or descend below the support portion.

In an alternative implementation, the driving mechanism comprises the rotating member, and a rotation axis of the rotating member extends vertically; the rotating member is provided with a first limiting structure; and the second limiting member is provided with a second limiting structure; one of the first limiting structure and the second limiting structure is a guide slider, and another of the first limiting structure and the second limiting structure is a guide groove extending spirally along a vertical direction; and the guide slider is slidably received in the guide groove, so that the rotating member is configured to be rotated to drive the second limiting member to move up and down in the vertical direction.

A second aspect of the present disclosure provides a printing apparatus, including an apparatus body and a capsule containing printing material; the capsule containing printing material is located in the locking device, and the first limiting member of the locking device is fixedly connected to the apparatus body; the capsule containing printing material includes a protruding portion on an outer periphery of the capsule containing printing material; and when the locking device is in a locked state, the second limiting member of the locking device abuts against the protruding portion of the capsule containing printing material to fix the capsule containing printing material.

### BRIEF DESCRIPTION OF DRAWINGS

In order to illustrate the technical solutions in the embodiments of the present disclosure or the related art more clearly, the drawings used in the description of the embodiments of the present disclosure or the related art will be briefly introduced below. It is apparent that the drawings described below are only some of the embodiments of the present disclosure. These drawings and descriptions are not intended to limit the scope of the concept of the present disclosure in any way, but rather to explain the concept of the present disclosure to those skilled in the art with reference to specific embodiments. For those of ordinary skill in the art, other drawings can be obtained based on these drawings without creative efforts.
FIG. 1 is a schematic structural diagram of a locking device according to an embodiment of the present disclosure.
FIG. 2 is an exploded schematic diagram of a locking device according to an embodiment of the present disclosure.
FIG. 3 is a schematic structural diagram of another locking device located in a printing apparatus according to an embodiment of the present disclosure.
FIG. 4 is a front view of a printing apparatus before locking according to an embodiment of the present disclosure.
FIG. 5 is a cross-sectional view of a partial region taken along a direction of line D-D shown in FIG. 4.
FIG. 6 is an exploded view of a locking device of a printing apparatus according to an embodiment of the present disclosure.
FIG. 7 is a schematic structural diagram of a printing apparatus according to an embodiment of the present disclosure.
FIG. 8 is a schematic cross-sectional view taken along line A-A shown in FIG. 7.

Description of reference signs:
100-locking device; 200-first limiting member; 210-first slot; 211-protrusion; 220-mounting hole; 230-second guiding structure; 300-second limiting member; 310-second slot; 320-first guiding structure; 330-step portion; 400-rotating member; 410-first shaft; 420-rotating body; 430-protruding end; 440-second shaft; 500- channel; 600- printing apparatus; 610-mounting platform; 620-guide groove; 630-support portion; 640-guide slider; 650-handle; 660-bearing; 670-spring; 700-apparatus body; 800- Target member; 810- protruding portion.

### DETAILED DESCRIPTION

The technical solutions in embodiments of the present disclosure will be clearly and completely described below with reference to accompanying drawings in the embodiments of the present disclosure, and it is apparent that the described embodiments are only a part of the embodiments of the present disclosure, rather than all of the embodiments. All other embodiments, which are obtained by a person of ordinary skill in the art based on the embodiments of the present disclosure without creative efforts, shall fall within the protection scope of the present disclosure.

Users often need to replace the material tanks to accommodate different materials or maintenance needs. Thus, such an operation should be convenient and efficient. However, in existing small-scale 3D printing apparatuses, the integration of multiple components leads to increased costs, complex assembly, low maintenance efficiency, and inconvenient operation.

For the foregoing technical problem, a first aspect of the embodiments of the present disclosure provides a locking device. The locking device includes a first limiting member, a second limiting member, and a rotating member. The second limiting member is disposed opposite to the first limiting member in a first direction, and a clamping space for receiving a target member is defined between the first limiting member and the second limiting member. The rotating member is configured to drive at least one of the first limiting member and the second limiting member, enabling relative movement between the first limiting member and the second limiting member in the first direction to jointly clamp or release the target member within the clamping space. Accordingly, the locking device provided by the embodiment of the present disclosure drives at least one of the first limiting member and the second limiting member to move up and down by rotating the rotating member, thereby achieving a locked or unlocked state of the target member. In addition, the locking device includes fewer components, which enhances modular design and ease of operation, and reduces costs.

A second aspect of the embodiments of the present disclosure provides a printing apparatus. The printing apparatus includes an apparatus body and a capsule containing printing material. The capsule containing printing material is applied to the locking device described above, and the first limiting member of the locking device is fixedly connected to the apparatus body. A protrusion is provided on the outer periphery of the capsule containing printing material. When the locking device is in a locked state, the second limiting member of the locking device abuts against the protrusion of the capsule containing printing material to secure the capsule containing printing material.

To make the foregoing objectives, features, and advantages of the embodiments of the present disclosure more comprehensible, the technical solutions in the embodiments of the present disclosure will be clearly and completely described below with reference to the accompanying drawings in the embodiments of the present disclosure. It is apparent that the described embodiments are only some, rather than all, of the embodiments of the present disclosure. All other embodiments obtained by a person of ordinary skill in the art based on the embodiments of the present disclosure without creative efforts shall fall within the protection scope of the present disclosure.

The embodiments of the present disclosure provide a locking device and a printing apparatus. Rotation of the rotating member drives at least one of the first limiting member and the second limiting member to move up and down, thereby realizing the locked or unlocked state of the capsule containing printing material. In addition, the locking device includes fewer components, which enhances modular design and ease of operation, and reduces costs. The specific structures of the locking device and the printing apparatus provided in the embodiments of the present disclosure will be described below with reference to the accompanying drawings.

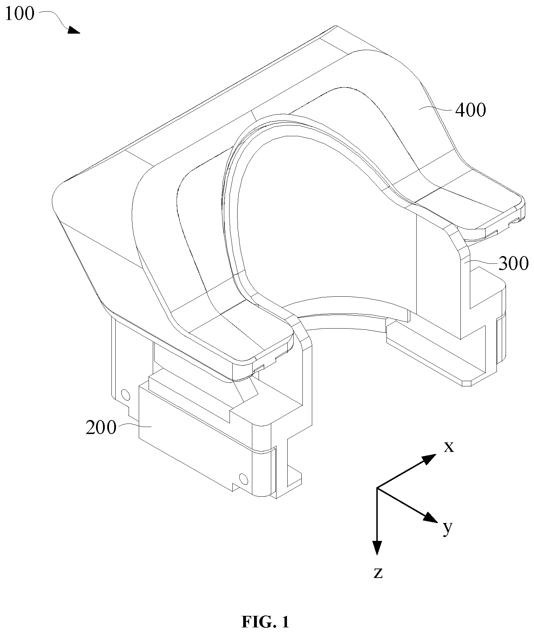

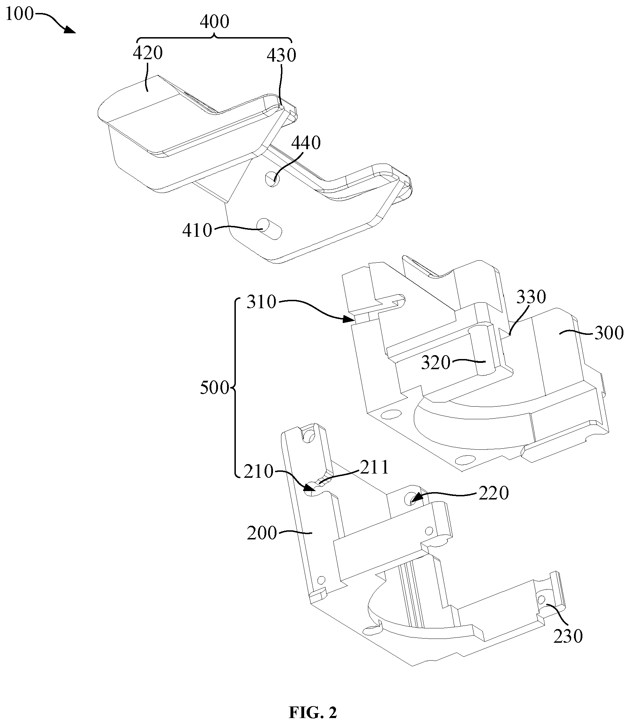

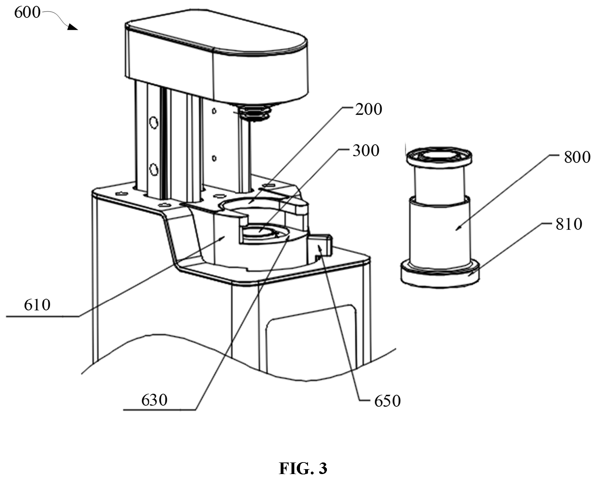

Referring to FIG. 1 and FIG. 2 and with further reference to FIG. 3, a first aspect of the embodiments of the present disclosure provides a locking device 100. The locking device 100 may include a first limiting member 200, a second limiting member 300, and a rotating member 400. In an embodiment of the present disclosure, the second limiting member 300 and the first limiting member 200 are disposed opposite to each other in a first direction, so that a clamping space for accommodating the target member 800 is defined between the first limiting member 200 and the second limiting member 300. In embodiments of the present disclosure, the target member 800 may include a capsule containing printing material. The following description will take the case where the target member is a capsule containing printing material as an example. For example, the clamping space for accommodating the capsule containing printing material 800 is defined between the first limiting member 200 and the second limiting member 300. In addition, the rotating member 400 can be configured to drive at least one of the first limiting member 200 and the second limiting member 300, causing the first limiting member 200 and the second limiting member 300 to move relative to each other along the first direction, thereby jointly clamping or releasing the capsule containing printing material 800 within the clamping space.

Based on the above embodiments, the rotating member 400 may be provided with an operating portion. In the embodiment of the present disclosure, the operating portion can be configured to allow the user to perform a single-point operation by flicking or pressing the operating portion with one hand, thereby driving the rotatg meinmber 400 to move, and achieving locking or unlocking of the capsule containing printing material 800.

In an alternative implementation, the first limiting member 200 is fixedly disposed, and the second limiting member 300 is slidably connected to the first limiting member 200.

It can be understood that a mounting structure for mounting the capsule containing printing material 800 is disposed on the second limiting member 300, and the second limiting member 300 can drive the capsule containing printing material 800 to reciprocate by sliding. When the second limiting member 300 slides away from the printing apparatus 600, the capsule containing printing material 800 may be mounted to the mounting structure or removed from the second limiting member 300. When the second limiting member 300 slides towards the printing apparatus 600, the capsule containing printing material 800 is driven to a working position. In this position, a glass table on the printing apparatus 600 abuts against a bottom of the capsule containing printing material 800 and presses a light-transmitting film of the capsule containing printing material 800, thereby cooperating with the second limiting member 300 to realize the positioning and locking of the capsule containing printing material 800.

In an embodiment of the present disclosure, the rotating member 400 may be located above the second limiting member 300, and the rotating member 400 may be rotatably connected to the first limiting member 200. Rotation of the rotating member 400 can drive the second limiting member 300 to slide up and down along the first limiting member 200, thereby realizing loading, locking and unloading of the capsule containing printing material 800.

Based on the above embodiments, the rotation of the rotating member 400 about a horizontal axis can drive the first limiting member 200 and the second limiting member 300 to move relative to each other.

With continued reference to FIG. 2, based on the foregoing embodiment, in an alternative implementation, a first shaft 410 may be disposed on the rotating member 400, and a channel 500 may be defined between the second limiting member 300 and the first limiting member 200. In an embodiment of the present disclosure, it may be understood that the channel 500 can allow the first shaft 410 to pass through and move, serving both to guide and position the first shaft 410 and to provide a clearance space for movement of the first shaft 410. The rotation and displacement of the first shaft 410 within the channel 500 can drive the second limiting member 300 to slide back and forth along the first direction relative to the first limiting member 200.

In this way, the locking device 100 provided by the embodiments of the present disclosure drives the second limiting member 300 to move up and down by rotating the rotating member 400, thereby realizing the locked or unlocked state of the capsule containing printing material 800. The first limiting member 200, the second limiting member 300, and the rotating member 400 are modularly integrated. By simply mounting the first limiting member 200 to the apparatus body, the locking device 100 is installed. Once the locking device 100 is installed, apparatus accessories can be locked to the apparatus body or the apparatus accessories installed on the apparatus body can be unlocked and removed. Thus, this configuration offers convenient installation and operation, as well as easy maintenance, thereby greatly improving efficiency and reducing costs. In addition, the locking device 100 includes only the first limiting member 200, the second limiting member 300 and the rotating member 400, which results in a small number of components and low cost, and facilitates assembly, disassembly and maintenance.

In an alternative implementation, the capsule containing printing material 800 may be a material tank containing liquid resin, which is not limited in the embodiments of the present disclosure.

It should be noted that, for ease of description, in the embodiments of the present disclosure, the first direction may be a height direction of the first limiting member 200 (i.e., the z direction in FIG. 1). A second direction may be a length direction of the first limiting member 200 (i.e., the x direction in FIG. 1). A third direction may be a width direction of the first limiting member 200 (i.e., the y direction in FIG. 1).

With continued reference to FIG. 2, based on the above embodiment, in an alternative implementation, a first slot 210 may be defined in the first limiting member 200, and correspondingly, a second slot 310 may be defined in the second limiting member 300. The first slot 210 and the second slot 310 may together form the channel 500, allowing the first shaft 410 to move within the channel 500. In another possible implementation, the channel 500 may also be formed solely by the second slot 310, that is, the channel 500 may be disposed only on the second limiting member 300. In the embodiments of the present disclosure, it can be understood that the rotation of the rotating member 400 drives the first shaft 410 to move within the channel 500, and during the rotation of the first shaft 410, the second limiting member 300 can be driven to slide back and forth along the first direction relative to the first limiting member 200, thereby achieving the locked or unlocked state of the capsule containing printing material 800.

With continued reference to FIG. 2, based on the above embodiment, in an alternative implementation, the first slot 210 may be provided with a protrusion 211. For example, the protrusion 211 may include, but is not limited to, a point-shaped protrusion, a strip-shaped protrusion, and other protrusions, a protruding portion, or a limiting portion. It can be understood that the protrusion 211 can be configured to form a motion dead point. Specifically, the protrusion 211 can cooperate with a wall of the first slot 210 to define a limiting region. In an embodiment of the present disclosure, when the first shaft 410 moves within the first slot 210 and comes into contact with the protrusion 211, a certain amount of force is to be applied to ride over the protrusion 211. Once riding over the protrusion 211, the first shaft 410 enters the limiting region, thereby achieving stable locking of the capsule containing printing material 800. Alternatively, when the first shaft 410 passes over the protrusion 211 and leaves the limiting region, the first shaft 410 may move within the channel 500, causing the second limiting member 300 to drive the capsule containing printing material 800 to move, and then switch to an unlocked state or another state. In this way, the mechanical limiting provided by the first slot 210 and the protrusion 211 ensures that the movement range of the second limiting member 300 is controllable, thereby maintaining a stable locking state. In addition, the design of the protrusion 211 can prevent accidental movement of the second limiting member 300, thereby improving the positioning accuracy of the capsule containing printing material 800.

With continued reference to FIG. 2, based on the above embodiments, the rotating member 400 may further include a rotating body 420. The rotating body 420 may be adapted to an outer surface of the second limiting member 300. In an alternative implementation, a surface of the rotating body 420 facing the second limiting member 300 may be a curved surface, thereby surrounding a periphery of the capsule containing printing material 800, which is not limited in the embodiments of the present disclosure.

In addition, the first shaft 410 is disposed below the rotating body 420, and an orthographic projection of the rotating body 420 toward the first limiting member 200 and an orthographic projection of the first shaft 410 toward the first limiting member can overlay. Thus, when viewed from above, the rotating body 420 can fully cover the first shaft 410, thereby shielding the channel 500 along the first direction, and avoiding dust accumulation in the locking device 100 to some extent.

With continued reference to FIG. 2, based on the above embodiment, the rotating member 400 may further include a protruding end 430. In an alternative implementation, there may be one or more protruding ends 430, and the quantity of protruding ends 430 is not limited in the embodiments of the present disclosure. In an embodiment of the present disclosure, by way of example, a configuration having two protruding ends 430 is described. The two protruding ends 430 are disposed at two ends of the rotating body 420 along the second direction, and each protruding end 430 extends outward along the third direction. It can be understood that the user can drive the entire rotating member 400 to move by operating the protruding ends 430, thereby causing the second limiting member 300 to slide back and forth along the first direction relative to the first limiting member 200, thus achieving the locked or unlocked state of the capsule containing printing material 800.

It can be understood that the protruding ends 430 of the rotating member 400 can serve as an operating portion, allowing the user to perform a single-point operation by pressing the protruding ends 430 with one hand, thereby driving the entire rotating member 400 to move.

With continued reference to FIG. 2, based on the foregoing embodiments, a second shaft 440 may be disposed on one of the rotating member 400 and the first limiting member 200, and a mounting hole 220 may be defined in the other of the rotating member 400 and the first limiting member 200. For example, the mounting hole 220 may include a through hole or a blind hole. In an embodiment of the present disclosure, it can be understood that the second shaft 440 can mate with the mounting hole 220, thereby enabling the rotating member 400 to be rotatably connected to the first limiting member 200. The rotating member 400 rotates relative to the first limiting member 200, and the first shaft 410 rotates accordingly, thereby driving the second limiting member 300 to move along the first direction relative to the first limiting member 200.

In an alternative implementation, the second shaft 440 may be disposed on the rotating member 400, and the mounting hole 220 may be defined in the first limiting member 200. Alternatively, in another possible implementation, the mounting hole 220 may be defined in the rotating member 400, and the second shaft 440 may be disposed on the first limiting member 200. It can be understood that the second shaft 440 and the mounting hole 220 are disposed correspondingly, which is not limited in the embodiments of the present disclosure.

With continued reference to FIG. 2, based on the above embodiment, in an alternative implementation, a first guiding structure 320 may be disposed on the second limiting member 300, and correspondingly, a second guiding structure 230 that mates with the first guiding structure 320 may be disposed on the first limiting member 200. In an alternative implementation, at least two groups of the first guiding structure 320 and the second guiding structure 230 may be provided, and are arranged in a distributed manner. In an embodiment of the present disclosure, if the second limiting member 300 is a cylindrical container, the first guiding structures 320 and the second guiding structures 230 may be evenly distributed in a circumferential direction. If the second limiting member 300 is a square container, the first guiding structure 320 and the second guiding structure 230 may be distributed in an annular direction. In an embodiment of the present disclosure, it can be understood that the cooperation between the plurality of distributed groups of first guiding structures 320 and the second guiding structures 230 enables the second limiting member 300 to slide back and forth along the first direction relative to the first limiting member 200.

In an alternative implementation, the first guiding structure 320 may be located on at least a portion of an outer surface of the second limiting member 300, and correspondingly, the second guiding structure 230 may be located on at least a portion of an inner surface of the first limiting member 200. It can be understood that the first guiding structure 320 and the second guiding structure 230 may be arranged correspondingly, so that the first guiding structure 320 and the second guiding structure 230 can cooperate with each other to create a rail-like effect, which facilitates the sliding of the second limiting member 300 up and down in the first direction.

With continued reference to FIG. 2, based on the foregoing embodiments, in an alternative implementation, the first guiding structure 320 may be at least one of a channel, a hole, or a rib. Correspondingly, the second guiding structure 230 may be at least one of a rib, a post, or a channel that can slidably cooperate with the first guiding structure 320. Alternatively, the second guiding structure 230 may be at least one of a channel, a hole, or a rib. Correspondingly, the first guiding structure 320 may be at least one of a rib, a post, or a channel that can slidably cooperate with the second guiding structure 230.

For example, when the first guiding structure 320 is a channel, the second guiding structure 230 may be a rib that cooperates with the channel. When the first guiding structure 320 is a hole, the second guiding structure 230 may be a post inserted into the hole. When the first guiding structure 320 is a rib, the second guiding structure 230 may be a channel that cooperates with the rib. Specific forms of the first guiding structure 320 and the second guiding structure 230 are not limited in the embodiments of the present disclosure, as long as the first guiding structure 320 and the second guiding structure 230 can cooperate with each other to provide sliding guidance.

In an embodiment of the present disclosure, for example, the first guiding structure 320 may be at least one of a channel, a hole, or a rib, and the second guiding structure 230 may be at least one of a rib, a post, or a channel that slidably cooperate with the first guiding structure 320.

Based on the foregoing embodiments, in an alternative implementation, an elastic member (not shown in the figures) may be disposed between the first guiding structure 320 and the second guiding structure 230. In an embodiment of the present disclosure, it can be understood that the elastic member can be configured to provide a certain elastic force, thereby facilitating the return of the second limiting member 300 to the initial position, making the locking or unlocking action of the locking device 100 smoother, and optimizing a user's handling experience.

For example, the elastic member may be a spring or a rubber member, which is not limited in the embodiments of the present disclosure.

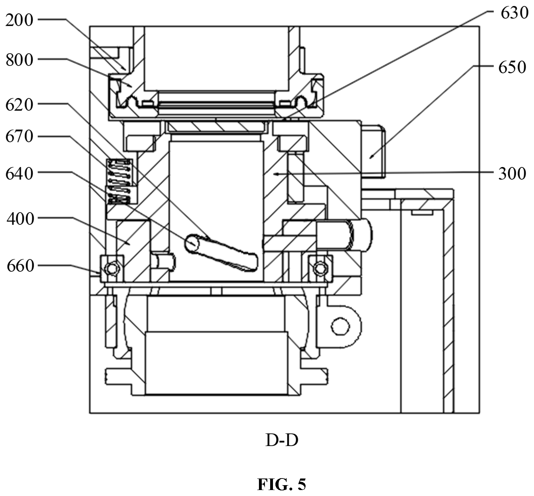

In another possible implementation, referring to FIG. 3, FIG. 4, FIG. 5, and FIG. 6, the locking device 100 may be disposed on a mounting platform 610 of the printing apparatus 600. The mounting platform 610 is a component that remains relatively stationary during operation. The first limiting member 200 and the second limiting member 300 are disposed on the mounting platform 610, the second limiting member 300 is located below the first limiting member 200, and the second limiting member 300 and the first limiting member 200 are configured to clamp the capsule containing printing material 800. A driving mechanism connected to the second limiting member 300 may also be included to drive the second limiting member 300 to move vertically toward or away from the first limiting member 200, enabling the first limiting member 200 and the second limiting member 300 to clamp or release the capsule containing printing material.

As shown in FIG. 3, the capsule containing printing material 800 is driven by the second limiting member 300 to move toward the first limiting member 200, so that the capsule containing printing material 800 is clamped therebetween. The mounting platform 610 may further be provided with a support portion 630 located below the first limiting member 200, and the support portion 630 has a through hole for the second limiting member 300 to extend through. The user may first place the capsule containing printing material 800 between the support portion 630 and the first limiting member 200 in the horizontal direction, and then drive the second limiting member 300 to extend through the through hole, thereby lifting the capsule containing printing material 800. In some embodiments of the present disclosure, the second limiting member is located in the through hole and is configured to, under driving of the driving mechanism, rise above or descend below the support portion. In other embodiments, the support portion 630 may be omitted, and the capsule containing printing material 800 may be directly supported by the second limiting member 300.

A protruding portion 810 is disposed on and protrudes outwardly from an outer sidewall of the capsule containing printing material 800. The second limiting member 300 and the first limiting member 200 are configured to clamp the protruding portion 810, and the clamping force is applied to the protruding portion 810, thereby achieving the positioning of the capsule containing printing material 800 without squeezing the capsule containing printing material 800, and thus avoiding damage to the capsule containing printing material 800.

A horizontal opening can be defined between the first limiting member 200 and the second limiting member 300, so that the capsule containing printing material 800 can be inserted between the first limiting member 200 and the second limiting member 300 along the horizontal direction through the horizontal opening.

Additionally, a horizontal limiting structure may further be provided. The horizontal limiting structure includes a U-shaped limiting surface. The U-shaped limiting surface has an opening that faces in the same direction as the horizontal opening. The U-shaped limiting surface includes a first plane, an arc-shaped surface, and a second plane that are connected in sequence, and the first plane is parallel to the second plane. The U-shaped limiting surface is configured to conform to the outer sidewall of the capsule containing printing material 800.

In an embodiment, the U-shaped limiting surface is configured to conform to the outer sidewall of the protruding portion 810 of the capsule containing printing material 800. The protruding portion 810 is inserted between the first plane and the second plane in the horizontal direction, and then pushed laterally until the protruding portion 810 abuts against the arc-shaped surface, thereby completing the horizontal positioning of the capsule containing printing material 800. In this state, a light-transmissive assembly of the capsule containing printing material 800 is coaxial with a light-transmissive hole on the second limiting member 300.

The driving mechanism may be driven in various ways, either manually or automatically. In some embodiments, an electric push rod may be employed to drive the second limiting member 300 to move up and down.

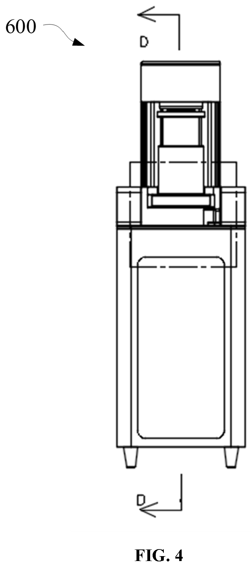

As shown in FIG. 4, FIG. 5 and FIG. 6, in this embodiment, the driving mechanism includes the rotating member 400 rotatably connected to the mounting platform 610. The rotating member 400 can only rotate, and the rotation axis of the rotating member 400 extends vertically. The rotating member 400 is an annular member sleeved on the outer periphery of the second limiting member 300. The rotating member 400 is provided with a guide slider 640 protruding toward the inner side of the annular member. A guide groove 620 is defined in the circumferential sidewall of the second limiting member 300 and extends spirally along the vertical direction, and the guide slider 640 is slidably received in the guide groove 620. In other embodiments, the guide groove 620 may be defined in the rotating member 400, and the guide slider 640 may be provided on the second limiting member 300.

A guide post is provided between the second limiting member 300 and the mounting platform 610, so that the second limiting member 300 can only move up and down, and cannot rotate. When the rotating member 400 rotates, the rotating member 400 moves along the spiral guide groove 620, thereby driving the second limiting member 300 to move up and down along the vertical direction.

A handle 650 may be connected to the rotating member 400. The user can manually rotate the rotating member 400 through the handle 650, to achieve up-down movement of the second limiting member 300. However, the rotating member 400 can also be driven to rotate by a motor.

It can be understood that the handle 650 on the rotating member 400 can serve as an operating portion, allowing the user to perform a single-point operation by flicking the handle 650 with one hand, thereby driving the entire rotating member 400 to move.

There may be a plurality of guide grooves 620 and a plurality of guide sliders 640 in one-to-one correspondence, thereby making the movement of the second limiting member 300 more stably, and reducing shaking.

A bearing 660, such as a ball bearing, is provided between the rotating member 400 and the mounting platform 610, thereby increasing the rotational smoothness of the rotating member 400.

An elastic member is disposed between the mounting platform 610 and the second limiting member 300. The elastic member may be a spring 670. A bottom end of the spring 670 is connected to the second limiting member 300. When the capsule containing printing material 800 is clamped, a top end of the spring 670 abuts against a bottom surface of the supporting portion 630 and the spring 670 is in a compressed state. When the capsule containing printing material 800 is unlocked, the spring 670 releases an elastic force, making it easier for the second limiting member 300 to descend.

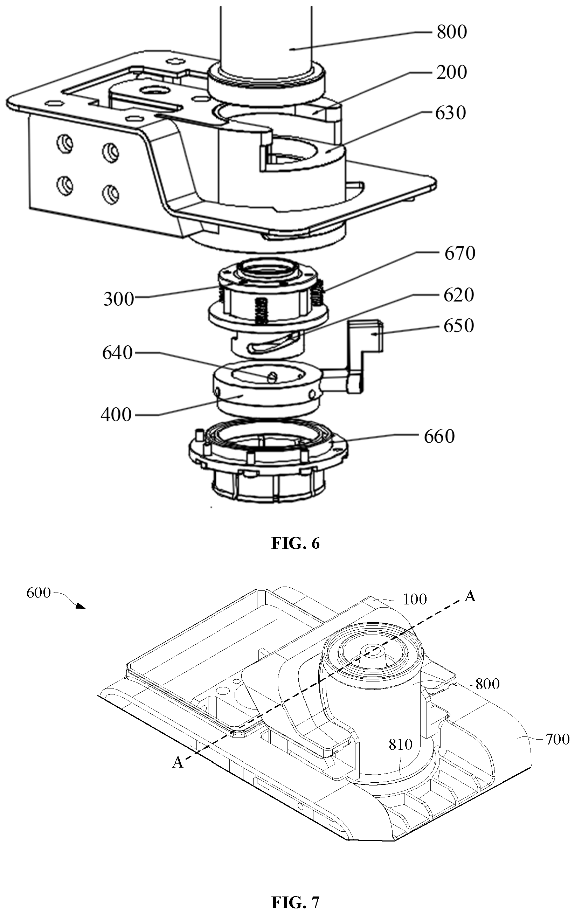

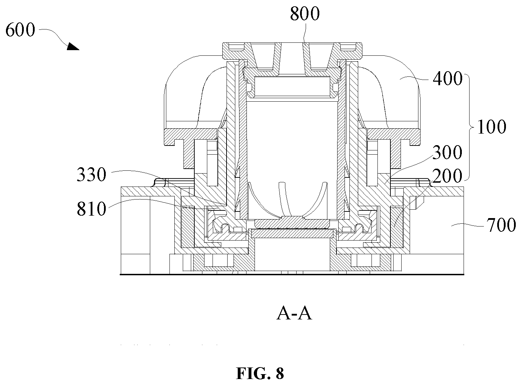

Referring to FIG. 7 and FIG. 8, a second aspect of the embodiments of the present disclosure provides a printing apparatus 600. The printing apparatus 600 may include an apparatus body 700 and a capsule containing printing material 800. In an embodiment of the present disclosure, it can be understood that the capsule containing printing material 800 may be located in the locking device 100 described above, and the locked and unlocked states of the capsule containing printing material 800 are achieved by the locking device 100. Specifically, the locking device 100 is fixedly connected to the apparatus body 700 through the first limiting member 200, thereby mounting the locking device 100 onto the apparatus body 700.

With continued reference to FIG. 8, based on the above embodiments, in an alternative implementation, the outer periphery of the capsule containing printing material 800 may have a protruding portion 810. Illustratively, the protruding portion 810 may protrude radially outward along the outer surface of the capsule containing printing material 800. Correspondingly, the second limiting member 300 of the locking device 100 may have a step portion 330, and the step portion 330 is disposed corresponding to the protruding portion 810. Specifically, step portions 330 may be respectively arranged in the up-down direction to form a limiting groove for receiving the protruding portions 810.

In an embodiment of the present disclosure, when the locking device 100 is in the locked state, the second limiting member 300 of the locking device 100 drives the capsule containing printing material 800 to move to a working position. In this state, a light-transmissive plate of the printing apparatus 600 abuts against and presses a light-transmissive film of the capsule containing printing material 800 at the bottom of the capsule containing printing material 800, while the step portion 330 of the second limiting member 300 abuts against the protruding portion 810 of the capsule containing printing material 800, thereby cooperating with the light-transmissive plate to jointly fix and limit the capsule containing printing material 800. When the locking device 100 is in the unlocked state, the second limiting member 300 drives the capsule containing printing material 800 to move away from the working position, so that the step portion 330 is separated from the protruding portion 810, and the light-transmissive plate is also separated from the bottom of the capsule containing printing material 800, leaving the capsule containing printing material 800 in the detachable state.

Specifically, when the user operates the protruding end 430 of the rotating member 400 of the locking device 100 to rotate clockwise, the rotating member 400 drives the second limiting member 300 to move downward along the first direction, thereby driving the capsule containing printing material 800 mounted thereon to move downward together to the working position. At this position, the light-transmissive plate of the printing apparatus 600 is embedded in the bottom of the capsule containing printing material 800 and abuts against the light-transmissive film, while the step portion 330 abuts against the protruding portion 810, thereby achieving the locking and fixing of the capsule containing printing material 800. When the user operates the protruding end 430 to rotate counterclockwise, the rotating member 400 drives the second limiting member 300 to move upward along the first direction, the capsule containing printing material 800 moves upward away from the working position, the step portion 330 is separated from the protruding portion 810, and the light-transmissive plate is also separated from the capsule containing printing material 800, thereby achieving the unlocking of the capsule containing printing material 800 and facilitating disassembly and replacement thereof. Thus, it can be understood that the locking device 100 can achieve rapid locking or unlocking of the capsule containing printing material 800, improving the overall operation experience of the product, and the various components are easy to replace and maintain, enhancing the product competitiveness.

Based on the above embodiments, the printing apparatus 600 may further include a support structure (not shown in the figures). The support structure may be located below the capsule containing printing material 800, and is fixed within the apparatus body 700. In an alternative implementation, the support structure is light-transmissive. For example, the support structure may be a projection glass, which is not limited in the embodiments of the present disclosure.

Based on the above embodiments, the support structure may be disposed at a position on the apparatus body 700 corresponding to the locking device 100. When the second limiting member 300 drives the capsule containing printing material 800 to move to the working position, the support structure is embedded in the bottom of the capsule containing printing material 800 and abuts against the light-transmissive film of the capsule containing printing material 800, providing a stable support for the capsule containing printing material 800. At the same time, the support structure cooperates with the second limiting member 300 of the locking device 100 to jointly limit and fix the capsule containing printing material 800 in the vertical direction and the horizontal direction, thereby ensuring the position accuracy during the printing process.

In an embodiment of the present disclosure, the locking device 100 provided by the embodiment of the present disclosure drives the second limiting member 300 to move up and down by rotating the rotating member 400, thereby achieving the locked or unlocked state of the capsule containing printing material 800. In addition, the locking device 100 includes fewer components, which enhances modular design and ease of operation, and reduces costs.

The embodiments or implementations in this specification are described in a progressive manner. Each embodiment focuses on the differences from other embodiments. For the same or similar parts among the various embodiments, reference can be made to the descriptions of other embodiments.

It should be noted that phrases such as "during implementation," "in some embodiments," "in this embodiment," "illustratively," etc., as used in this specification, indicate that the described embodiment may include a particular feature, structure, or characteristic, but not every embodiment necessarily includes the particular feature, structure, or characteristic. Moreover, such phrases do not necessarily refer to the same embodiment. Further, when a particular feature, structure, or characteristic is described in connection with an embodiment, it is within the knowledge of a person skilled in the art to implement such feature, structure, or characteristic in connection with other embodiments whether or not explicitly described.

In general, terms should be understood at least partially from the context. For example, the term "one or more" as used herein, depending at least in part upon the context, may be used to describe any feature, structure, or characteristic in a singular sense or may be used to describe combinations of features, structures or characteristics in a plural sense. Similarly, terms, such as "a," "an," or "the," may be understood to indicate a singular or plural usage, depending at least in part upon the context.

It should be readily understood that the terms "on," "above," and "over" in the present disclosure are to be interpreted in the broadest manner. Accordingly, the term "on" means not only "directly on" something, but also includes the meaning of being "on" something with an intermediate feature or layer therebetween, and the term "above" or "over" includes not only the meaning of being "above" or "over" something, but can also include the meaning of being "above" or "over" something with no intermediate feature or layer therebetween (i.e., directly on something).

Further, spatially relative terms, such as "beneath," "below," "lower," "above," "upper," and the like, may be used herein for ease of description to describe the relationship of one element or feature to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations), and the spatially relative descriptors used herein should be interpreted accordingly.

In addition, ordinal numbers such as "first," "second," and the like, are used herein to describe different components or steps, and these ordinal numbers are only used for the purpose of distinction and reference, and should not be construed as implying any particular order, importance, or quantity limitation. For example, "first limiting member" and "second limiting member" are only used to distinguish two different limiting members, and do not imply any necessary order or primary-secondary relationship in terms of structure, function, or installation sequence.

Finally, it should be noted that, after considering the specification and practicing the present application disclosed herein, other embodiments of the present disclosure will be readily apparent to those skilled in the art. The present disclosure is intended to cover any variations, uses, or adaptive changes of the present disclosure that follow the general principles of the present disclosure and include common knowledge or conventional technical means in the art not disclosed in the present disclosure, and is not limited to the precise structures that have been described above and shown in the accompanying drawings. Various modifications and changes can be made without departing from the scope of the present disclosure. The scope of the present disclosure is to be limited only by the appended claims.

## Claims

1. A locking device, **characterized by** comprising:
a first limiting member (200);
a second limiting member (300) disposed opposite to the first limiting member (200) along a first direction, wherein a clamping space for receiving a target member (800) is defined between the first limiting member (200) and the second limiting member (300); and
a rotating member (400) configured to drive at least one of the first limiting member (200) and the second limiting member (300), enabling relative movement between the first limiting member (200) and the second limiting member (300) in the first direction to jointly clamp or release the target member (800) placed in the clamping space.

2. The locking device according to claim 1, **characterized in that** the rotating member (400) comprises an operating portion configured to allow a user to perform a single-point operation by flicking or pressing the operating portion with one hand, thereby driving the rotating member (400) to move and achieving locking or unlocking of the target member (800), and/or
the target member comprises a capsule containing printing material.

3. The locking device according to claim 2, **characterized in that** the second limiting member (300) is slidably disposed on the first limiting member (200), the rotating member (400) is located above the second limiting member (300), and the rotating member (400) is rotatably connected to the first limiting member (200); and
wherein a first shaft (410) is disposed on the rotating member (400), a channel (500) configured for allowing the first shaft (410) to move therein is defined between the second limiting member (300) and the first limiting member (200), and the first shaft (410) is caused to rotate to drive the second limiting member (300) to slide back and forth along the first direction relative to the first limiting member (200), thereby achieving the locking or unlocking of the target member (800).

4. The locking device according to claim 3, **characterized in that** a first slot (210) is defined in the first limiting member (200), a second slot (310) is defined in the second limiting member (300), and the first slot (210) and the second slot (310) define the channel (500); and
wherein the rotating member (400) is configured to be rotated to: drive the first shaft (410) to move within the channel (500), and thus drive the second limiting member (300) to slide back and forth along the first direction relative to the first limiting member (200).

5. The locking device according to claim 4, **characterized in that** the first slot (210) is provided with a protrusion (211) for forming a motion dead point; and
wherein when the first shaft (410) moves to be in contact with the protrusion (211), a force is to be applied to ride over the protrusion (211) to move within the channel (500).

6. The locking device according to claim 5, **characterized in that** the rotating member (400) comprises a rotating body (420) and a protruding end (430);
wherein the rotating body (420) conforms to an outer surface of the second limiting member (300), and an orthographic projection of the rotating body (420) toward the first limiting member (200) and an orthographic projection of the first shaft (410) toward the first limiting member overlay; and
wherein the protruding end (430) is configured to be rotated to: drive the rotating member (400) to move, and thus drive the second limiting member (300) to slide back and forth along the first direction relative to the first limiting member (200).

7. The locking device according to any one of claims 3 to 6, **characterized in that** one of the rotating member (400) and the first limiting member (200) is provided with a second shaft (440), and another of the rotating member (400) and the first limiting member (200) is provided with a mounting hole (220); and
wherein the second shaft (440) mates with the mounting hole (220), so that the rotating member (400) is rotatably connected to the first limiting member (200).

8. The locking device according to any one of claims 3 to 6, **characterized in that** the second limiting member (300) is provided with a first guiding structure (320), and the first limiting member (200) is provided with a second guiding structure (230); and
wherein the first guiding structure (320) mates with the second guiding structure (230), so that the second limiting member (300) is slidable back and forth along the first direction relative to the first limiting member (200).

9. The locking device according to claim 2, **characterized by** further comprising a driving mechanism connected to the second limiting member (300) and configured to drive the second limiting member (300) to move vertically toward or away from the first limiting member (200), enabling the first limiting member (200) and the second limiting member (300) to clamp or release the target member (800).

10. The locking device according to claim 9, **characterized in that** a horizontal opening is defined between the first limiting member (200) and the second limiting member (300), enabling the target member (800) to be inserted between the first limiting member (200) and the second limiting member (300) in a horizontal direction through the horizontal opening.

11. The locking device according to claim 10, **characterized by** further comprising a horizontal limiting structure configured for positioning the target member (800) in the horizontal direction.

12. The locking device according to claim 11, **characterized in that** the horizontal limiting structure comprises a U-shaped limiting surface, the U-shaped limiting surface has an opening that faces in a same direction as the horizontal opening, the U-shaped limiting surface comprises a first plane, an arc-shaped surface and a second plane that are connected in sequence, and the first plane is parallel to the second plane.

13. The locking device according to claim 9, **characterized by** further comprising a support portion (630) located below the first limiting member (200); and
wherein a through hole is defined in the support portion (630), and the second limiting member (300) is located in the through hole and is configured to, under driving of the driving mechanism, rise above or descend below the support portion (630).

14. The locking device according to claim 9, **characterized in that** the driving mechanism comprises the rotating member (400), and a rotation axis of the rotating member (400) extends vertically; the rotating member (400) is provided with a first limiting structure; and
wherein the second limiting member (300) is provided with a second limiting structure; one of the first limiting structure and the second limiting structure is a guide slider (640), and another of the first limiting structure and the second limiting structure is a guide groove (620) extending spirally along a vertical direction; and the guide slider (640) is slidably received in the guide groove (620), so that the rotating member (400) is configured to be rotated to drive the second limiting member (300) to move up and down in the vertical direction.

15. A printing apparatus, **characterized by** comprising:
an apparatus body (700); and
a capsule containing printing material (800);
wherein the capsule containing printing material (800) is located in the locking device according to any one of claims 1 to 14, and the first limiting member (200) of the locking device is fixedly connected to the apparatus body (700);
wherein the capsule containing printing material (800) comprises a protruding portion (810) on an outer periphery of the capsule containing printing material (800); and
wherein when the locking device is in a locked state, the second limiting member (300) of the locking device (100) abuts against the protruding portion (810) of the capsule containing printing material (800) to fix the capsule containing printing material (800).
